# EUROPÄISCHE PATENTANMELDUNG

(11) **EP 4 053 425 A1**
(43) Veröffentlichungstag der Anmeldung: **07.09.2022**
(21) Anmeldenummer: 22160087.7
(22) Anmeldetag: 03.03.2022
(51) Int. Cl.: F16D 1/096

(54) **KONUSELEMENT FÜR EINE WELLE-NABE-VERBINDUNG, WELLE-NABE-VERBINDUNG MIT EINEM KONUSELEMENT SOWIE DREHGEBERANORDNUNG MIT EINER WELLE-NABE-VERBINDUNG MIT EINEM KONUSELEMENT**

(30) Priorität: 04.03.2021 DE 102021105279
(71) Anmelder: PWB encoders GmbH, 99817 Eisenach (DE)
(72) Erfinder: Vock, Gerhard, 37297 Berkatal (DE); Heckrodt, Bernd, 37308 Kella (DE)
(74) Vertreter: Westphal, Mussgnug & Partner Patentanwälte mbB

(57) **Zusammenfassung**

Konuselement für eine Welle-Nabe-Verbindung (50) mit einer ersten Stirnseite (16), einer zweiten Stirnseite und einer entlang einer Konuslängsachse (14) angeordneten, von der ersten Stirnseite zur zweiten Stirnseite (18) verlaufenden Längsbohrung (12) und mindestens einer Außenkonusfläche (22, 24), wobei die mindestens eine Außenkonusfläche (22, 24) mindestens zwei in regelmäßigen Abständen zueinander angeordnete Schlitze (26, 28) aufweist.

## Beschreibung

Die Erfindung betrifft ein Konuselement für eine Welle-Nabe-Verbindung, eine Welle-Nabe-Verbindung mit einem entsprechenden Konuselement sowie eine Drehgeberanordnung mit einer Welle-Nabe-Verbindung mit einem entsprechenden Konuselement.

Bauteile mit konischen Wirkflächen sind bewährte Mittel, um reibschlüssige Welle-Nabe-Verbindungen herzustellen. Ein Vorteil solcher Konusverbindungen liegt darin, dass sich eine besonders gute Konzentrizität zwischen Welle und Nabe erreichen lässt. Deshalb werden sie häufig bei Produkten eingesetzt, in denen besonders hohe Anforderungen an die Konzentrizität zwischen Welle und Nabe bestehen.

So zeigt die EP 1 517 120 A1 eine Konusverbindung im Zusammenhang mit einem Drehgeber. Dabei weist die Nabe eine Geberwelle auf, an der das Messsignal abgegriffen wird. Die Welle-Nabe-Verbindung wird dabei mittels eines als Spannzange bezeichneten Konuselements hergestellt, das als Doppelkonus ausgebildet ist, der in axialer Richtung an beiden Enden eine konische Wirkfläche aufweist.

Nachteilig an solchen Systemen ist, dass sie zur Erreichung der gewünschten Klemmwirkung und Konzentrizität hohe Anforderungen an die Passgenauigkeiten zwischen Konuselement und Welle sowie die Maßgenauigkeit stellen. So darf die Differenz zwischen dem Innendurchmesser des Konuselements und dem Wellendurchmesser nur wenige hundertstel Millimeter betragen. Die Herstellung solcher Konusverbindungen geht mit einem dementsprechend hohen Fertigungsaufwand einher.

Systeme, die geringere Anforderungen an die Maß- und Passgenauigkeit stellen, können erreicht werden, indem das Konuselement mit einem Längsschlitz versehen wird. Ein solcher Längsschlitz durchschneidet das Konuselement typischerweise über dessen gesamte Länge, ist also durchgehend ausgebildet. Wie in der EP 1 517 120 A1 beschrieben, kann das Konuselement durch einen Längsschlitz elastischer ausgebildet werden, womit größere Durchmesseränderungen beim Klemmvorgang ermöglicht werden können.

Die DE 37 07 716 A1 und die DE 23 29 940 A1 zeigen weitere Beispiele für Konusverbindungen, die ein Konuselement mit einem durchgehenden Längsschlitz aufweisen können.

Nachteilig an derartigen Konusverbindungen ist, dass ein Längsschlitz, insbesondere ein durchgehender Längsschlitz in einem Konuselement grundsätzlich einen ungleichmäßigen und damit exzentrisch wirkenden Kraftvektor zur Folge hat. Dies steht jedoch im Widerspruch mit dem Ziel, ein hohes Maß an Konzentrizität zwischen Welle und Nabe zu erreichen.

Der Erfindung liegt daher die Aufgabe zugrunde, ein Konuselement für eine Welle-Nabe-Verbindung bereitzustellen, mit dem sich ein hohes Maß an Konzentrizität zwischen Welle und Nabe erreichen lässt und das darüber hinaus einfach herstellbar ist. Der Erfindung liegt darüber hinaus die Aufgabe zugrunde, eine Welle-Nabe-Verbindung mit einem entsprechenden Konuselement sowie eine Drehgeberanordnung mit einem entsprechenden Konuselement bereitzustellen.

Die Aufgabe wird erfindungsgemäß gelöst durch ein Konuselement mit den Merkmalen des Patentanspruchs 1, eine Welle-Nabe-Verbindung mit den Merkmalen des Patentanspruchs 11 sowie eine Drehgeberanordnung mit den Merkmalen des Patentanspruchs 14.

Vorteilhafte Ausgestaltungen und Weiterbildungen der Erfindung sind in den abhängigen Ansprüchen angegeben.

Das erfindungsgemäße Konuselement mit einer ersten Stirnseite und einer zweiten Stirnseite zeichnet sich dadurch aus, dass es entlang einer Konuslängsachse eine von der ersten Stirnseite zur zweiten Stirnseite verlaufende Längsbohrung und mindestens eine Außenkonusfläche aufweist, wobei die mindestens eine Außenkonusfläche mindestens zwei in regelmäßigen Abständen zueinander angeordnete Schlitze aufweist.

Durch die mindestens zwei Schlitze kann die Elastizität des Konuselements in radialer Richtung erhöht werden. Die Anordnung der Schlitze in regelmäßigen Abständen resultiert vorzugsweise darin, dass in Bezug auf die Längsbohrung die Abstände in Umfangsrichtung zwischen den einzelnen Schlitzen jeweils gleich groß sind.

Im Anwendungsfall des Konuselements in einer Welle-Nabe-Verbindung kann das Konuselement mittels der Längsbohrung eine Welle aufnehmen. Zur Fixierung der Nabe auf der Welle wird ein Nabenelement auf das Konuselement aufgeschoben. Vorzugsweise weist das Nabenelement dabei eine Innenkonusfläche auf, deren Kontur vorzugsweise der der Außenkonusfläche entspricht. Durch das Aufschieben des Nabenelements kann das Konuselement in radialer Richtung komprimiert werden. Damit kann sowohl zwischen dem Nabenelement und dem Konuselement als auch zwischen dem Konuselement und der Welle jeweils eine reibschlüssige Verbindung entstehen. Eine erhöhte radiale Elastizität des Konuselements kann dabei zu einer erhöhten Reibkraft zwischen Konuselement und Welle führen.

Mit der Kompression des Konuselements kann über den gesamten Umfang der Längsbohrung bzw. der Welle eine senkrecht zur Konuslängsachse wirkende Normalkraft erzeugt werden. Im Bereich der Schlitze kann dabei infolge der insbesondere lokal verringerten Steifigkeit, eine erhöhte Normalkraft auftreten. Durch die Anordnung der Schlitze in regelmäßigen Abständen kann vermieden werden, dass in Bezug auf die Konuslängsachse ein exzentrisch wirkender resultierender Kraftvektor entsteht. Um einen entsprechenden Kraftausgleich erzielen zu können, weist das Konuselement erfindungsgemäß mindestens zwei Schlitze auf.

Vorzugsweise ist jeder der Schlitze in einem eine Abschnittslänge aufweisenden axialen Abschnitt des Konuselements angeordnet, wobei die Abschnittslänge kleiner als eine Konuselementlänge ist. Die Konuselementlänge kann dabei als Länge des Konuselements und damit als Strecke zwischen der ersten Stirnseite und der zweiten Stirnseite beschrieben werden. Die Schlitze sind damit vorzugsweise in Richtung der Konuslängsachse nicht durch das Konuselement hindurchgehend ausgebildet. Somit durchtrennen vorzugsweise die Schlitze das Konuselement in Richtung der Konuslängsachse nicht vollständig.

Vorzugsweise ist das Verhältnis der Abschnittslänge zu der Konuselementlänge größer als 0,75, vorzugsweise größer als 0,85.

Bevorzugt weist das Konuselement zwischen der ersten Stirnseite zugewandten Enden der zweiten Schlitze und der ersten Stirnseite sowie zwischen der zweiten Stirnseite zugewandten Enden der ersten Schlitze und der zweiten Stirnseite jeweils einen Stirnseitenabstand auf. Vorzugsweise ist damit zwischen der dem jeweiligen Schlitz entgegengesetzten Stirnseite und dem der entgegengesetzten Stirnseite zugewandten Ende des Schlitzes jeweils der Stirnseitenabstand angeordnet.

Die der jeweils entgegengesetzten Stirnseite zugewandten Enden der Schlitze sind vorzugsweise abgerundet ausgebildet. Damit können insbesondere bei der bestimmungsgemäßen Verwendung des Konuselements Kerbspannungen reduziert werden.

In einer Ausführungsform der Erfindung ist das Verhältnis des Stirnseitenabstands zu einer Konuselementlänge bevorzugt kleiner oder gleich 0,25, besonders bevorzugt kleiner oder gleich 0,15.

Eine Schlitzlänge kann als Länge des Schlitzes und damit als Strecke zwischen der dem Ende des Schlitzes in der entsprechenden Stirnseite und dem der entgegengesetzten Stirnseite zugewandten Ende des Schlitzes beschrieben werden. Vorzugsweise stellt die Schlitzlänge dabei nicht die kürzeste Strecke zwischen den beiden Schlitzenden eines Schlitzes dar, sondern folgt der Trajektorie, also der Bahnkurve des Schlitzes.

Sind die Schlitze parallel zur Konuslängsachse ausgebildet, ist die Schlitzlänge vorzugsweise mit der Abschnittslänge identisch. In diesem Fall ist dementsprechend das Verhältnis der Schlitzlänge zu der Konuselementlänge bevorzugt größer 0,75, besonders bevorzugt größer 0,85. Sind die Schlitze hingegen nicht parallel zur Konuslängsachse ausgebildet, kann trotz des vorhandenen Stirnseitenabstands das Verhältnis der Schlitzlänge zur Konuselementlänge größer oder gleich 1 sein. Insbesondere um bei der bestimmungsgemäßen Verwendung des Konuselements ausgeglichene Elastizitäts- und Kraftverhältnisse zu schaffen, weisen bevorzugt alle Schlitze die gleiche Geometrie auf.

Vorzugsweise umfassen die Schlitze durch mindestens zwei erste Schlitze und mindestens zwei zweite Schlitze, wobei sich die ersten Schlitze ausgehend von einer ersten Stirnseite des Konuselements und die zweiten Schlitze sich ausgehend von einer zweiten Stirnseite des Konuselements in die mindestens eine Außenkonusfläche erstrecken. Die Schlitze entsprechen in ihrer Benennung somit vorzugsweise der Stirnseite, von der aus sie sich in die Außenkonusfläche erstrecken. Im Folgenden wird dieser Nomenklatur folgend von entsprechenden bzw. von entgegengesetzten Schlitzen und Stirnseiten gesprochen. So können beispielsweise die ersten Schlitze als der ersten Stirnseite entsprechend und der zweiten Stirnseite entgegengesetzt bezeichnet werden.

Damit sind die ersten Schlitze und die zweiten Schlitze vorzugsweise gegensinnig angeordnet. Dadurch kann eine hohe Elastizität des Konuselements bei gleichzeitiger hoher Stabilität erreicht werden. Bevorzugt weist ein Konuselement die gleiche Anzahl an ersten Schlitzen und zweiten Schlitzen auf.

Vorzugsweise sind die ersten Schlitze und die zweiten Schlitze in Umfangsrichtung um die Konuslängsachse dabei wechselsinnig angeordnet, sodass in Umfangsrichtung stets auf einen ersten Schlitz ein zweiter Schlitz und auf einen zweiten Schlitz ein erster Schlitz folgt. Damit kann ein resultierender exzentrischer Kraftvektor vermieden werden.

In einer bevorzugten Ausführungsform der Erfindung umfassen die Schlitze drei erste und drei zweite Schlitze. Werden die Schlitze in regelmäßigen Abständen zueinander angeordnet, ergibt sich damit vorzugsweise ein erster Versatz zwischen zwei in Umfangsrichtung nebeneinander angeordneten ersten Schlitzen von 120°. Entsprechendes gilt für die zweiten Schlitze. Ein resultierender Versatz zwischen einem ersten Schlitz und einem in Umfangsrichtung daneben angeordneten zweiten Schlitz ergibt sich damit vorzugsweise zu 60°. Aufgrund der Anzahl von drei ersten Schlitzen und drei zweiten Schlitzen kann ein elastisches und gleichzeitig stabiles und ausreichend steifes Konuselement erreicht werden, bei dem darüber hinaus ein resultierender exzentrischer Kraftvektor vermieden werden kann. Ein insgesamt sechs Schlitze aufweisendes Konuselement kann außerdem mit relativ geringem Aufwand gefertigt werden.

Vorzugsweise weisen die Schlitze eine Schlitzbreite auf, wobei bevorzugt die Schlitzbreite über die Schlitzlänge konstant ist. Dadurch können sie Schlitze insbesondere einfach zu fertigen sein.

Bevorzugt sind die Schlitze derart ausgebildet, dass sie unabhängig von einer der beiden Stirnseiten in radialer Richtung eine Verbindung zwischen der Längsbohrung und der Außenkonusfläche herstellen. Ein Schlitz stellt also vorzugsweise einen vollständigen Durchbruch durch das Material des Konuselements in radialer Richtung mit den Abmessungen Schlitzlänge und Schlitzbreite dar.

Hinsichtlich der Anordnung der Schlitze sind verschiedene Ausführungsformen denkbar. Die Schlitze können insbesondere parallel zur Konuslängsachse, angeordnet sein, beispielsweise in dem sie in einer die Konuslängsachse umfassenden Längsschnittebene angeordnet sind. Sind die Schlitze parallel zur Konuslängsachse angeordnet ist die Schlitzlänge vorzugsweise mit der Abschnittslänge identisch.

Alternativ können die Schlitze beispielsweise spiralförmig um die Konuslängsachse angeordnet sein. Vorzugsweise sind alle Schlitze des Konuselements identisch angeordnet. So können insbesondere bei bestimmungsgemäßer Verwendung des Konuselements ausgeglichene Elastizitäts- und Kraftverhältnisse geschaffen werden.

Insbesondere durch die Länge, die Anzahl, die Anordnung und die Geometrie der Schlitze kann die Elastizität des Konuselements gezielt eingestellt werden.

In einer Weiterbildung der Erfindung ist das Konuselement als Doppelkonus mit einer ersten Außenkonusfläche und einer zweiten Außenkonusfläche ausgebildet. Bevorzugt ist der Doppelkonus derart ausgebildet, dass die erste Außenkonusfläche und die zweite Außenkonusfläche voneinander abgewandt angeordnet sind. Dadurch dass der Doppelkonus zwei Außenkonusflächen aufweist, kann bei Verwendung des Konuselements eine höhere Normalkraft erreicht werden.

Eine erfindungsgemäße Welle-Nabe-Verbindung weist eine Welle, eine Nabe und ein Verbindungselement auf, wobei das Verbindungselement durch ein Konuselement gemäß einer der vorstehend beschriebenen Ausführungsformen gebildet wird.

Vorzugsweise ist die Welle in der Längsbohrung des Konuselements angeordnet und die Nabe weist mindestens eine Innenkonusfläche auf, die mit der mindestens einen Außenkonusfläche des Konuselements zumindest abschnittsweise in Wirkverbindung steht. Die Nabe ist bevorzugt so ausgebildet, das die mindestens eine Innenkonusfläche zumindest abschnittsweise an der mindestens einen Außenkonusfläche anliegt. Je weiter die mindestens eine Innenkonusfläche auf die mindestens eine Außenkonusfläche aufgeschoben wird, desto stärker kann das Konuselement komprimiert werden. Eine Kompression des Konuselements kann eine Normalkraft zur Folge haben, die über den gesamten Umfang der Längsbohrung in radialer Richtung auf die Welle wirken kann. Damit kann eine reibschlüssige Verbindung zwischen dem Konuselement und der Welle hergestellt werden.

Vorzugsweise weist die Nabe ein erstes Nabenelement und ein zweites Nabenelement auf. Bevorzugt ist dabei die mindestens eine Innenkonusfläche an dem ersten Nabenelement angeordnet. Die Nabe kann Spannmittel aufweisen, mittels derer das erste Nabenelement und das zweite Nabenelement in axialer Richtung gegeneinander gespannt werden können. Damit kann das Aufschieben der mindestens einen Innenkonusfläche auf die mindestens eine Außenkonusfläche bewirkt werden. Die Spannmittel können insbesondere als Schrauben ausgebildet sein. Eine entsprechende Schraubverbindung kann beispielsweise derart ausgebildet sein, dass das erste Nabenelement Durchgangsbohrungen und das zweite Nabenelement Gewindebohrungen aufweist.

In einer besonders bevorzugten Ausführungsform der Welle-Nabe-Verbindung ist das Verbindungselement als Doppelkonus ausgebildet. Dabei weist vorzugsweise das erste Nabenelement eine erste Innenkonusfläche und das zweite Nabenelement eine zweite Innenkonusfläche auf. Bevorzugt stehen die dabei die erste Innenkonusfläche und die erste Außenkonusfläche sowie die zweite Innenkonusfläche und die zweite Außenkonusfläche zumindest abschnittsweise miteinander in Wirkverbindung. Durch axiales Gegeneinanderspannen des ersten Nabenelements und des zweiten Nabenelements kann die erste Innenkonusfläche zumindest abschnittsweise auf die erste Außenkonusfläche und die zweite Innenkonusfläche zumindest abschnittsweise auf die zweite Außenkonusfläche aufgeschoben werden. Damit kann im Hinblick auf die den Reibschluss zwischen Konuselement und Welle verursachende Normalkraft eine besonders wirksame Kompression des Konuselements ermöglicht werden.

Eine erfindungsgemäße Drehgeberanordnung weist eine Welle-Nabe-Verbindung gemäß einer der vorgehend beschriebenen Ausführungsformen auf. Dabei wird die Welle durch eine Messwelle gebildet und die Nabe weist eine Geberwelle auf. Die Messwelle kann z.B. durch eine Welle gebildet werden, deren Drehzahl ermittelt werden soll. Die Geberwelle kann beispielweise Inkremente aufweisen, die von einem Sensor erfasst werden können. Durch die Verwendung einer vorgehend beschriebenen Welle-Nabe-Verbindung kann insbesondere ein hohes Maß an Konzentrizität zwischen Messwelle und Geberwelle erreicht werden.

Ein Ausführungsbeispiel der Erfindung wird anhand der nachfolgenden Figuren erläutert. Es zeigt:
- Figur 1: eine perspektivische Ansicht eines Konuselements,
- Figur 2: eine Schnittansicht einer Welle-Nabe-Verbindung mit dem in Figur 1 dargestellten Konuselement.

Der Übersichtlichkeit halber werden nicht alle Bezugszeichen in jeder Figur verwendet.

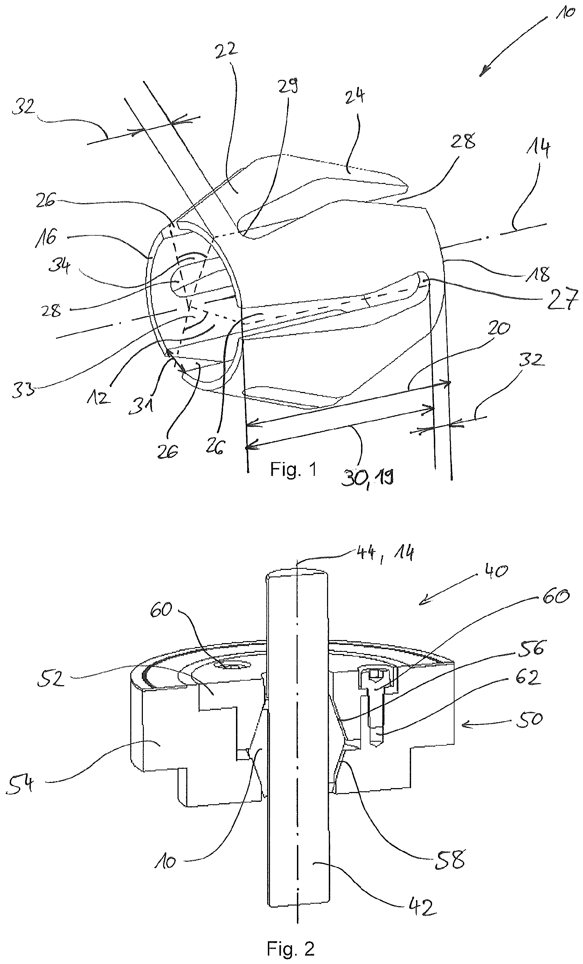

Figur 1 zeigt ein Konuselement 10 mit einer ersten Stirnseite 16, einer zweiten Stirnseite 18 und einer entlang einer Konuslängsachse 14 angeordneten, von der ersten Stirnseite 16 zur zweiten Stirnseite 18 verlaufenden Längsbohrung 12. Das Konuselement 10 ist vorzugsweise als Doppelkonus ausgebildet und kann eine erste Außenkonusfläche 22 und eine zweite Außenkonusfläche 24 aufweisen. Bevorzugt ist der Doppelkonus derart ausgebildet, dass die erste Außenkonusfläche 22 und die zweite Außenkonusfläche 24 voneinander abgewandt angeordnet sind. Dadurch dass der Doppelkonus zwei Außenkonusflächen 22, 24 aufweist, kann bei bestimmungsgemäßer Verwendung des Konuselements 10 eine höhere Normalkraft erreicht werden.

Die Außenkonusflächen 22, 24 können drei erste Schlitze 26 und drei zweite Schlitze 28 aufweisen. Die ersten Schlitze 26 können sich dabei ausgehend von der ersten Stirnseite 16 des Konuselements 10 und die zweiten Schlitze 28 ausgehend von der zweiten Stirnseite 18 des Konuselements 10 in die Außenkonusflächen 22, 24 erstrecken. Dabei kann jeder Schlitz 26, 28 zumindest teilweise in der ersten Außenkonusfläche 22 und zumindest teilweise in der zweiten Außenkonusfläche 24 angeordnet sein. Die ersten Schlitze 26 und die zweiten Schlitze 28 sind vorzugsweise gegensinnig angeordnet. Dadurch kann eine hohe Elastizität des Konuselements 10 bei gleichzeitiger hoher Stabilität erreicht werden. Darüber hinaus sind vorzugsweise die ersten Schlitze 26 und die zweiten Schlitze 28 in Umfangsrichtung um die Konuslängsachse 14 wechselsinnig angeordnet, sodass in Umfangsrichtung stets auf einen ersten Schlitz 26 ein zweiter Schlitz 28 und auf einen zweiten Schlitz 28 ein erster Schlitz 26 folgt.

Durch die Anordnung der Schlitze 26, 28 in regelmäßigen Abständen zueinander ergibt sich damit vorzugsweise ein erster Versatz 33 zwischen zwei in Umfangsrichtung nebeneinander angeordneten ersten Schlitzen von 120°. Entsprechendes gilt für die zweiten Schlitze. Ein resultierender Versatz 34 zwischen einem ersten Schlitz 26 und einem in Umfangsrichtung daneben angeordneten zweiten Schlitz 28 ergibt sich damit vorzugsweise zu 60°.

Mit der Kompression des Konuselements 10 durch Krafteinleitung über die Außenkonusflächen 22, 24 kann über den gesamten Umfang der Längsbohrung 12 eine senkrecht zur Konuslängsachse 14 wirkende Normalkraft erzeugt werden. Im Bereich der Schlitze 26, 28 kann dabei infolge der insbesondere lokal verringerten Steifigkeit, eine erhöhte Normalkraft auftreten. Durch die Anordnung der Schlitze 26, 28 in regelmäßigen Abständen kann vermieden werden, dass in Bezug auf die Konuslängsachse 14 ein exzentrisch wirkender resultierender Kraftvektor entsteht. Mit der Anzahl von drei ersten Schlitzen 26 und drei zweiten Schlitzen 28 kann ein elastisches und gleichzeitig stabiles und ausreichend steifes Konuselement 10 erreicht werden. Ein insgesamt sechs Schlitze 26, 28 aufweisendes Konuselement 10 kann außerdem mit relativ geringem Aufwand gefertigt werden.

Vorzugsweise ist jeder der Schlitze 26, 28 in einem eine Abschnittslänge 19 aufweisenden axialen Abschnitt des Konuselements 10 angeordnet, wobei die Abschnittslänge 19 kleiner als eine Konuselementlänge 20 ist. Die Konuselementlänge 20 kann dabei als Länge des Konuselements 10 und damit als Strecke zwischen der ersten Stirnseite 16 und der zweiten Stirnseite 18 beschrieben werden. Die Schlitze 26, 28 sind damit vorzugsweise in Richtung der Konuslängsachse 14 nicht durch das Konuselement 10 hindurchgehend ausgebildet. Somit durchtrennen vorzugsweise die Schlitze 26, 28 das Konuselement 10 in Richtung der Konuslängsachse 14 nicht vollständig.

Vorzugsweise ist das Verhältnis der Abschnittslänge 19 zu der Konuselementlänge 20 größer als 0,75, vorzugsweise größer als 0,85.

Bevorzugt weist das Konuselement 10 zwischen der ersten Stirnseite 16 zugewandten Enden 29 der zweiten Schlitze 28 und der ersten Stirnseite 16 sowie zwischen der zweiten Stirnseite 18 zugewandten Enden 27 der ersten Schlitze 26 und der zweiten Stirnseite 18 jeweils einen Stirnseitenabstand 32 auf. Vorzugsweise ist damit zwischen der dem jeweiligen Schlitz 26, 28 entgegengesetzten Stirnseite 18 ,16 und dem der entgegengesetzten Stirnseite 18 ,16 zugewandten Ende 27, 29 des Schlitzes 26, 28 jeweils der Stirnseitenabstand 32 angeordnet.

Die der jeweils entgegengesetzten Stirnseite 16, 18 zugewandten Enden 29, 27 der Schlitze 26, 28 sind vorzugsweise abgerundet ausgebildet. Damit können insbesondere bei der bestimmungsgemäßen Verwendung des Konuselements 10 Kerbspannungen reduziert werden.

In einer Ausführungsform der Erfindung ist das Verhältnis des Stirnseitenabstands 32 zu einer Konuselementlänge bevorzugt kleiner oder gleich 0,25, besonders bevorzugt kleiner oder gleich 0,15.

Eine Schlitzlänge 30 kann als Länge des Schlitzes 26, 28 und damit als Strecke zwischen der dem Ende des Schlitzes 26, 28 in der entsprechenden Stirnseite 16, 18 und dem der entgegengesetzten Stirnseite 18, 16 zugewandten Ende 27, 29 des Schlitzes beschrieben werden. Exemplarisch kann die Schlitzlänge 30 des ersten Schlitzes 26 dementsprechend als Strecke zwischen dem Ende des ersten Schlitzes 26 in der ersten Stirnseite 16 und dem der zweiten Stirnseite 18 zugewandten Ende 27 des ersten Schlitzes 26 beschrieben werden. Entsprechendes gilt für die Beschreibung der Schlitzlänge 30 der zweiten Schlitze 28.

Vorzugsweise stellt die Schlitzlänge 30 dabei nicht die kürzeste Strecke zwischen den beiden Schlitzenden eines Schlitzes 26, 28 dar, sondern folgt der Trajektorie, also der Bahnkurve des Schlitzes 26, 28. Sind die Schlitze 26, 28, wie in Figur 1 dargestellt, parallel zur Konuslängsachse 14 ausgebildet, ist die Schlitzlänge 30 vorzugsweise mit der Abschnittslänge 19 identisch. In diesem Fall ist die Schlitzlänge 30 vorzugsweise gleich der kürzesten Strecke zwischen den beiden Schlitzenden eines Schlitzes 26, 28. Dementsprechend ist das Verhältnis der Schlitzlänge 30 zu der Konuselementlänge 20 bevorzugt größer 0,75, besonders bevorzugt größer 0,85. Insbesondere um bei der bestimmungsgemäßen Verwendung des Konuselements 10 ausgeglichene Elastizitäts- und Kraftverhältnisse zu schaffen, weisen bevorzugt alle Schlitze 26, 28 die gleiche Geometrie und Anordnung auf.

Vorzugsweise weisen die Schlitze 26, 28 neben der Schlitzlänge 30 eine Schlitzbreite 31 auf, wobei bevorzugt die Schlitzbreite 31 über die Schlitzlänge 30 konstant ist. Dadurch können sie Schlitze 26, 28 insbesondere einfach zu fertigen sein.

Bevorzugt sind die Schlitze 26, 28 derart ausgebildet, dass sie unabhängig von einer der beiden Stirnseiten 16, 18 eine radiale Verbindung zwischen der Längsbohrung 12 und den Außenkonusflächen 22, 24 herstellen. Ein Schlitz 26 ,28 stellt also vorzugsweise einen vollständigen Durchbruch durch das Material des Konuselements 10 in radialer Richtung mit den Abmessungen Schlitzlänge 30 und Schlitzbreite 31 dar.

Insbesondere durch die Länge, die Anzahl, die Anordnung und die Geometrie der Schlitze 26, 28 kann die Elastizität des Konuselements 10 gezielt eingestellt werden.

Figur 2 zeigt eine Welle-Nabe-Verbindung 40, die eine Welle 42 mit einer Wellenlängsachse 44, eine Nabe 50 sowie ein Verbindungselement aufweist, wobei das Verbindungselement durch das als Doppelkonus ausgebildete Konuselement 10 gebildet wird. Vorzugsweise ist die Welle 42 derart in der Längsbohrung 12 des Konuselements 10 angeordnet, dass die Wellenlängsachse 44 mit der Konuslängsachse 14 zusammenfällt.

Die Nabe 50 weist vorzugsweise ein erstes Nabenelement 52 und ein zweites Nabenelement 54 auf. Dabei weist vorzugsweise das erste Nabenelement 52 eine erste Innenkonusfläche 56 und das zweite Nabenelement 54 eine zweite Innenkonusfläche 58 auf. Die erste Innenkonusfläche 56 kann eine Kontur aufweisen, die der der ersten Außenkonusfläche 22 entspricht. Ebenso kann die zweite Innenkonusfläche 58 kann eine Kontur aufweisen, die der der zweiten Außenkonusfläche 24 entspricht. Bevorzugt stehen die dabei die erste Innenkonusfläche 56 und die erste Außenkonusfläche 22 sowie die zweite Innenkonusfläche 58 und die zweite Außenkonusfläche 24 zumindest abschnittsweise miteinander in Wirkverbindung. Die Nabe 50 ist bevorzugt so ausgebildet, das die erste Innenkonusfläche 56 zumindest abschnittsweise an der ersten Außenkonusfläche 22 und die zweite Innenkonusfläche 58 zumindest abschnittsweise an der zweiten Außenkonusfläche 24 anliegen kann.

Je weiter die Innenkonusflächen 56, 58 auf die Außenkonusflächen 22, 24 aufgeschoben werden, desto stärker kann das Konuselement 10 komprimiert werden. Eine Kompression des Konuselements 10 kann eine Normalkraft zur Folge haben, die über den gesamten Umfang der Längsbohrung 12 in radialer Richtung auf die Welle 42 wirken kann. Damit kann eine reibschlüssige Verbindung zwischen dem Konuselement 10 und der Welle 42 entstehen. Eine insbesondere durch die Schlitze 26, 28 erhöhte radiale Elastizität des Konuselements 10 kann dabei zu einer erhöhten Reibkraft zwischen Konuselement 10 und Welle 42 führen. Darüber hinaus kann mittels der beschriebenen Anordnung eine form- und reibschlüssige Verbindung zwischen der Nabe 50 und dem Konuselement 10 hergestellt werden.

Durch axiales Gegeneinanderspannen des ersten Nabenelements 52 und des zweiten Nabenelements 54 kann die erste Innenkonusfläche 56 zumindest abschnittsweise auf die erste Außenkonusfläche 22 und die zweite Innenkonusfläche 58 zumindest abschnittsweise auf die zweite Außenkonusfläche 24 aufgeschoben werden. Die Nabe 50 kann Spannmittel aufweisen, mittels derer das erste Nabenelement 52 und das zweite Nabenelement 54 in axialer Richtung gegeneinander gespannt werden können. Die Spannmittel können insbesondere als Schrauben 60 ausgebildet sein. Eine entsprechende Schraubverbindung kann beispielsweise derart ausgebildet sein, dass das erste Nabenelement 52 Durchgangsbohrungen und das zweite Nabenelement 54 Gewindebohrungen 62 aufweist.

Durch die Ausbildung des Konuselements 10 als Doppelkonus kann im Hinblick auf die den Reibschluss zwischen Konuselement 10 und Welle 42 verursachende Normalkraft eine besonders wirksame Kompression des Konuselements 10 ermöglicht werden.

### Bezugszeichenliste

- 10: Konuselement
- 12: Längsbohrung
- 14: Konuslängsachse
- 16: erste Stirnseite
- 18: zweite Stirnseite
- 19: Abschnittslänge
- 20: Konuselementlänge
- 22: erste Außenkonusfläche
- 24: zweite Außenkonusfläche
- 26: erster Schlitz
- 27: der zweiten Stirnseite zugewandtes Ende
- 28: zweiter Schlitz
- 29: der ersten Stirnseite zugewandtes Ende
- 30: Schlitzlänge
- 31: Schlitzbreite
- 32: Stirnseitenabstand
- 33: erster Versatz
- 34: resultierender Versatz
- 40: Welle-Nabe-Verbindung
- 42: Welle
- 44: Wellenlängsachse
- 50: Nabe
- 52: erstes Nabenelement
- 54: zweites Nabenelement
- 56: erste Innenkonusfläche
- 58: zweite Innenkonusfläche
- 60: Schraube
- 62: Gewindebohrung

## Patentansprüche

1. Konuselement für eine Welle-Nabe-Verbindung (50) mit einer ersten Stirnseite (16), einer zweiten Stirnseite und einer entlang einer Konuslängsachse (14) angeordneten, von der ersten Stirnseite zur zweiten Stirnseite (18) verlaufenden Längsbohrung (12) und mindestens einer Außenkonusfläche (22, 24)
**dadurch gekennzeichnet, dass**
die mindestens eine Außenkonusfläche (22, 24) mindestens zwei in regelmäßigen Abständen zueinander angeordnete Schlitze (26, 28) aufweist.

2. Konuselement nach Anspruch 1,
**dadurch gekennzeichnet, dass**
jeder der Schlitze (26, 28) in einem eine Abschnittslänge (19) aufweisenden axialen Abschnitt des Konuselements (10) angeordnet ist und die Abschnittslänge (19) kleiner als eine Konuselementlänge (20) ist.

3. Konuselement nach Anspruch 2,
**dadurch gekennzeichnet, dass**
das Verhältnis der Abschnittslänge (19) zu der Konuselementlänge (20) größer als 0,75, vorzugsweise größer als 0,85, ist.

4. Konuselement nach einem der vorhergehenden Ansprüche,
**dadurch gekennzeichnet, dass**
die Schlitze (26, 28) mindestens zwei erste Schlitze (26) und mindestens zwei zweite Schlitze (28) umfassen, wobei sich die ersten Schlitze (26) ausgehend von der ersten Stirnseite (16) des Konuselements (10) und die zweiten Schlitze (28) sich ausgehend von der zweiten Stirnseite (18) des Konuselements (10) in die mindestens eine Außenkonusfläche (22, 24) erstrecken.

5. Konuselement nach Anspruch 4,
**dadurch gekennzeichnet, dass**
die ersten Schlitze (26) und die zweiten Schlitze (28) in Umfangsrichtung um die Konuslängsachse (14) wechselsinnig angeordnet sind.

6. Konuselement nach einem der Ansprüche 4 bis 5,
**dadurch gekennzeichnet, dass**
die Schlitze (26, 28) drei erste Schlitze (26) und drei zweite Schlitze (28) umfassen.

7. Konuselement nach einem der vorhergehenden Ansprüche,
**dadurch gekennzeichnet, dass**
die Schlitze (26, 28) eine Schlitzbreite (31) und eine Schlitzlänge (30) aufweisen, wobei die Schlitzbreite (31) über die Schlitzlänge (30) konstant ist.

8. Konuselement nach einem der vorhergehenden Ansprüche,
**dadurch gekennzeichnet, dass**
die Schlitze (26, 28) parallel zur Konuslängsachse (14) angeordnet sind.

9. Konuselement nach einem der vorhergehenden Ansprüche,
**dadurch gekennzeichnet, dass**
die Schlitze (26, 28) spiralförmig um die Konuslängsachse (14) angeordnet sind.

10. Konuselement nach einem der vorhergehenden Ansprüche,
**dadurch gekennzeichnet, dass**
das Konuselement (10) als Doppelkonus mit einer ersten Außenkonusfläche (22) und einer zweiten Außenkonusfläche (24) ausgebildet ist.

11. Welle-Nabe-Verbindung
mit einer Welle (42), einer Nabe (50) und einem Verbindungselement,
**dadurch gekennzeichnet, dass**
das Verbindungselement als Konuselement (10) nach einem der Ansprüche 1 bis 10 ausgebildet ist.

12. Welle-Nabe-Verbindung nach Anspruch 11,
**dadurch gekennzeichnet, dass**
die Welle (42) in der Längsbohrung (12) des Konuselements (10) angeordnet ist und die Nabe (50) mindestens eine Innenkonusfläche (56, 58) aufweist, die mit der mindestens einen Außenkonusfläche (22, 24) des Konuselements (10) zumindest abschnittsweise in Wirkverbindung steht.

13. Welle-Nabe-Verbindung nach Anspruch 12,
**dadurch gekennzeichnet, dass**
das Verbindungselement als Konuselement (10) nach Anspruch 10 ausgebildet ist und die Nabe (50) ein erstes Nabenelement (52) mit einer ersten Innenkonusfläche (56) und ein zweites Nabenelement (54) mit einer zweiten Innenkonusfläche (58) aufweist, wobei die erste Innenkonusfläche (56) und die erste Außenkonusfläche (22) sowie die zweite Innenkonusfläche (58) und die zweite Außenkonusfläche (24) zumindest abschnittsweise miteinander in Wirkverbindung stehen.

14. Drehgeberanordnung
mit einer Welle-Nabe-Verbindung (40) nach einem der Ansprüche 11 bis 13, wobei die Welle (42) durch eine Messwelle gebildet wird und die Nabe (50) eine Geberwelle aufweist.
